# EUROPÄISCHE PATENTSCHRIFT

(11) **EP 3 956 037 B1**
(45) Veröffentlichungstag und Bekanntmachung des Hinweises auf die Patenterteilung: **19.04.2023**
(21) Anmeldenummer: 19742560.6
(22) Anmeldetag: 18.07.2019
(51) Int. Cl.: A62B 3/00, B23D 29/02, B25B 27/02

(54) **TRAGBARES RETTUNGSGERÄT SOWIE ANORDNUNG UMFASSEND EIN RETTUNGSGERÄT**
PORTABLE RESCUE DEVICE AND ARRANGEMENT COMPRISING A RESCUE DEVICE
APPAREIL DE SAUVETAGE PORTATIF ET ENSEMBLE COMPRENANT UN APPAREIL DE SAUVETAGE

(43) Veröffentlichungstag der Anmeldung: 23.02.2022
(73) Patentinhaber: Lukas Hydraulik GmbH, 91058 Erlangen (DE)
(72) Erfinder: KIRCHNER, Uwe, 91080 Marloffstein (DE)
(74) Vertreter: Stippl Patentanwälte
(86) Internationale Anmeldenummer: PCT/EP2019/069316
(87) Internationale Veröffentlichungsnummer: WO 2021/008707

(56) Entgegenhaltungen:
- EP-A1- 3 192 614
- WO-A1-2012/134469
- WO-A1-2017/190799
- DE-A1-102018 100 517

## Beschreibung

Die vorliegende Erfindung betrifft ein tragbares Rettungsgerät, nämlich ein Spreizgerät, Schneidgerät oder Kombigerät mit Schneid- sowie Spreizfunktion, für den portablen Rettungseinsatz gemäß dem Oberbegriff des Anspruchs 1.

### Technologischer Hintergrund

Rettungsgeräte werden überwiegend von Feuerwehren sowie Katastropheneinsatzkräften verwendet. Sie sind portabel und werden von der Bedienungsperson im Einsatz mit beiden Händen geführt. Bei einem Rettungseinsatz ist der Zeitfaktor von ganz entscheidender Bedeutung, da oftmals das Überleben von verunfallten oder verschütteten Personen abhängt. Infolgedessen ist es gerade im Rettungseinsatz von besonderer Wichtigkeit, dass der jeweilige Benutzer über eine große Erfahrung verfügt, mit dem Rettungsgerät umzugehen. Probleme kann es bisweilen jedoch bei solchen Benutzern geben, die noch nicht über diesen Erfahrungsschatz verfügen. Kommt es hierbei zu Anwendungsfehlern, kann dies beträchtliche Zeit in Anspruch nehmen und daher für die verunfallte oder verschüttete Person unter Umständen fatale Folgen haben.

Es besteht daher ein grundlegendes Bedürfnis dahingehend, soweit es geht, zusätzliche Zeiten verursachende Fehlanwendungen eines Rettungsgeräts im Einsatz zu vermeiden.

Fahrzeuge beinhalten heutzutage eine Vielzahl von Sicherheitssystemen wie Airbags, Notbremsassistenten, alternative Antriebe und neue Materialien. Moderne Fahrzeuge werden daher immer sicherer. Jedoch können versteckt verbaute Airbags oder Hochvolt-Stromleitungen Rettungskräfte oder Unfallopfer bei der Bergung Letzterer gefährden. Hochfeste Materialen und Verbauungen in der Fahrzeugkarosserie können Rettungswerkzeuge beschädigen oder wirkungslos machen. Umso wichtiger ist es heutzutage, dass die Einsatzkräfte wissen, wo an der Karosserie das Rettungswerkzeug effektiv und gefahrlos angesetzt werden kann und welche Vorsichtsmaßnahmen nötig sind, um z.B. Airbags nicht ungewollt auszulösen oder ein Hochvoltsystem eines Elektroautos zuverlässig zu deaktivieren.

Entsprechende Informationen finden die Einsatzkräfte in einer sogenannten Rettungskarte. Hierbei handelt es sich um einen Ausdruck mit herstellerspezifischen Daten, der vom Fahrzeughalter hinter der Fahrersonnenblende angebracht werden sollte. Eine Rettungskarte wird jedoch nicht von jedem Fahrzeughalter entsprechend deponiert. Zudem kann eine Rettungskarte bei einem Unfall auch verloren gehen oder zerstört werden. Aber auch wenn eine Rettungskarte von den Einsatzkräften aufgefunden wird, benötigt die Auswertung derselben durch den jeweiligen Anwender des Rettungsgeräts in der Praxis noch immer ziemlich viel Zeit, da es sich bei den Informationen der Rettungskarte lediglich um textliche sowie bildliche Daten handelt, die erst noch gedanklich verarbeitet werden müssen.

Gerade im Bereich der Rettungstechnik besteht daher ein besonderes Konfliktfeld zwischen einer möglichst schnellen Durchführung der Rettungsmaßnahmen einerseits sowie andererseits der Verarbeitung einsatzspezifischer Informationen.

### Druckschriftlichem Stand der Technik

Aus der DE 10 2018 100 517 A1 ist ein Arbeitsgerät gemäß dem Oberbegriff des Anspruchs 1 bekannt, bei dem ein Funkmodul vorgesehen ist. Das Funkmodul ist Teil eines wahlweise mit dem Arbeitsgerät verbindbaren Funktionsmoduls, insbesondere in Form eines Smartphones, wobei das Funktionsmodul lediglich zur Energieversorgung bei einer Verbindung mit dem Arbeitsgerät eine leitermäßige Verbindung eingehen kann oder induktiv mit Energie versorgt werden kann. Mit dem Funktionsmodul kann eine Kontrolle des Arbeitsprozesses vorgenommen oder eine Dokumentation des Arbeitsprozesses erstellt und übermittelt werden.

Aus der EP 3 192 641 A1 ist ein System zur Verbesserung des Betriebs eines Werkzeugs im Hinblick auf eine Effizienzsteigerung der Produktivität sowie Reduzierung Handwerkerkosten bekannt. Das System umfasst einen Computer, der über eine Nahbereichs-Funkverbindung mit einem Werkzeug in einer Datenverbindung steht. Das System umfasst ferner ein Display am Computer oder der Nutzer des Werkzeugs verfügt über ein nutzerseitiges Display, z. B. über ein sog. Headup-Display. Über den Computer können Benutzerführungsdaten abgerufen und am Display wiedergegeben werden.

Die WO 2012/134469 A1 zeigt eine Akkubohrmaschine mit einem an dessen Gehäuse angeordneten, von einer durchsichtigen Linse überdecktes Display zur Anzeige von Daten.

Aus der DE 10 2017 206 064 A1 ist ein Verfahren zur Überwachung eines Arbeitsfortschritts einer Baustelle bekannt, bei dem im Bereich der Baustelle eine Erfassungseinheit angeordnet ist, die zumindest einen Betriebsparameter einer Handwerkzeugmaschine erfasst und an eine Auswerteeinheit übermittelt, wobei basierend auf den erfassten Betriebsparametern Kenngrößen ermittelt werden, die für den Arbeitsfortschritt relevant sind. Die Kenngrößen werden auf einer Anzeigeeinheit angezeigt. Bei der Anzeigeeinheit handelt es sich um ein Smartphone.

Die DE 10 2015 226 084 A1 offenbart eine Handwerkzeugmaschine, die mit einer Benutzerführungseinheit ausgestattet ist, die mit einem mobilen Computer bzw. Smartphone bzw. Tablet-Computer kommuniziert, sodass über den mobilen Computer Einstellungen bezüglich der Benutzerführung der Handwerkzeugmaschine vorgenommen werden können.

Aus der DE 10 2015 115 469 A1 ist ein Werkzeugsystem mit Kraftschrauber und einer externen Bedieneinheit bekannt. Das externe Bedienteil umfasst einen Display und steht über Funk mit dem Kraftschrauber sowie einem PC in Verbindung.

Die DE 10 2011 121 469 A1 betrifft ein akkubetriebenes Schraubwerkzeug, welches mit einer externen USB-/Bluetooth-Tastatur bedienbar ist. Die in einem vom Werkzeugspeicher abgelegten Werkzeugbetriebsdaten können mittels der externen Tastatur abgefragt werden. Die Eingaben mittels der externen Tastatur werden an einem vom Werkzeug umfassten Display angezeigt, wie auch Mitteilungen der Werkzeugsteuerung für den Bediener. Hierbei handelt es sich jedoch um keine Videodaten.

### Aufgabe der vorliegenden Erfindung

Die Aufgabe der vorliegenden Erfindung besteht darin, die Häufigkeit von Fehlbedienungen eines tragbaren Rettungsgeräts zu reduzieren.

### Lösung der Aufgabe

Die vorstehende Aufgabe wir durch ein Rettungsgerät gemäß dem Gegenstand des Anspruchs 1 gelöst. Zweckmäßige Ausgestaltungen des erfindungsgemäßen Rettungsgeräts werden in den abhängigen Ansprüchen beansprucht.

Dadurch, dass das Rettungsgerät eine Kommunikationsschnittstelle für Videodaten aufweist und es sich bei den Videodaten um Benutzerführungsdaten, insbesondere um Videofilmsequenzen zur Benutzerführung, und bei dem Display um ein Video-fähiges Display handelt, können unmittelbar am Rettungsgerät, welches von dem Benutzer mit einer oder zwei Händen geführt wird, während des Einsatzes dem Benutzer Handhabungsinformationen per Video gegeben werden. Hierdurch wird der Benutzer in die Lage versetzt, zugleich entsprechende Maßnahmen während des Einsatzes zu treffen, wodurch die Wahrscheinlichkeit von Fehlbedienungen und dadurch verursachten zeitlichen Unterbrechungen bzw. Verzögerungen in erheblichem Umfang reduziert werden.

Die Erfindung ermöglicht es, beispielsweise dem Benutzer des Rettungsgeräts eine detaillierte Videoanleitung direkt am Gerät zu geben, wie er beispielsweise bei einem bestimmten Pkw-Typ beim Durchtrennen von Pkw-Teilen, wie z.B. einer B- oder C-Säule umgehen soll, um nicht versehentlich einen Seitenaufprallairbag oder dergleichen auszulösen. Gerad im Rettungseinsatz ermöglicht die Erfindung ein rasches Handeln, vor allem auch in Situationen, in denen der Benutzer zusätzliche Informationen in Bezug auf den Einsatz seines Rettungsgeräts benötigt.

Gemäß einer zweckmäßigen Ausgestaltung können neben den Videodaten zusätzlich auch Audiodaten über die Kommunikationsschnittstelle dem Rettungsgerät zugeführt und als Benutzerführungsdaten zur Verfügung gestellt werden. Der Benutzer ist damit in der Lage, sprachlich unterstützte Filmsequenzen als Benutzerführung sogleich während des Einsatzes zu empfangen und zu verwerten. Hierdurch wird die Einsatzeffektivität des Rettungsgeräts in ganz besonderem Maße erhöht.

Zweckmäßigerweise befindet sich an der Oberseite des Displays eine dauerhaft am Display befestigte Schutzschicht. Hierbei kann es sich beispielsweise um eine Hartglasschicht oder transparente Hartkunststoffschicht handeln.

Anstelle einer dauerhaft am Display befestigten Schutzschicht oder zusätzlich zu letzterer kann zweckmäßigerweise eine Schutzabdeckung zur Verbesserung des mechanischen Schutzes des Displays am Rettungsgerät bzw. dessen Gehäuse vorgesehen sein, welche lediglich kurzzeitig bei Bedarf von der Bedienungsperson während des Einsatzes des Rettungsgeräts zur Freilegung des Displays entfernbar ist. Sofern während des Einsatzes somit eine Situation entsteht, bei der eine rasche Information erforderlich ist, kann die Schutzabdeckung am Display in einfacher Weise abgenommen werden. Ansonsten sorgt die Schutzabdeckung für einen wirksamen Schutz des Video-fähigen Displays.

Insbesondere kann die Schutzabdeckung derart konzipiert sein, dass sie vom Display oder vom Gehäuse des Rettungsgeräts lösbar sowie bei Bedarf mit dem Display oder Gehäuse des Rettungsgeräts wieder vereinbar bzw. verbindbar ist.

Als besonders vorteilhaft hat sich herausgestellt, wenn die Schutzabdeckung zwar beweglich zum Display ist, aber während des Betriebs am Rettungsgerät bzw. an dessen Gehäuse bzw. Display unverlierbar verbleibt.

Besonders vorteilhaft ist es, wenn die Schutzabdeckung zum Display verschiebbar ist, also durch Verschieben der Schutzabdeckung das Display freilegbar ist. Hierdurch kann mit einem einzigen Handgriff während des Betriebs des Rettungsgeräts das Display freigelegt werden.

Ebenso kann die Schutzabdeckung zum Display auch verschwenkbar befestigt sein. Auch hier kann mit einem Handgriff das Display freigelegt werden.

Eine weitere zweckmäßige Ausgestaltung der vorliegenden Erfindung besteht darin, als Display ein sogenanntes Faltdisplay vorzusehen. Bei einem Faltdisplay werden zwei Displaybereiche zueinander faltbar eingerichtet, sodass das Display im gefalteten Zustand desselben einen ausreichenden Schutz gegen mechanische Beeinträchtigung während des Einsatzes des Rettungsgeräts erfährt.

Da das Display als Bestandteil des Rettungsgeräts sehr häufig intensiven mechanischen Beeinträchtigungen ausgesetzt sein kann, ist es vorteilhaft, wenn an der Oberseite des Displays eine dauerhaft am Display befestigte Schutzschicht, wie z.B. eine Glasschicht oder eine transparente Kunststoffschicht, vorgesehen ist.

Da ein Rettungsgerät in der Regel unter widrigen Einsatzbedingungen verwendet wird, ist es von zusätzlichem Vorteil, wenn das Display, sofern keine Informationen benötigt werden, mit einer Schutzabdeckung versehen ist. Die Schutzabdeckung ist hierbei so konzipiert, dass das Display bei Bedarf während des Betriebs jederzeit freigelegt werden kann bzw. nach Empfang der Video- bzw. Video/Audio-Informationen wieder abgedeckt werden kann. Hierdurch wird sichergestellt, dass das Display somit lediglich zu den Zeiten der tatsächlichen Wiedergabe von Video- bzw. Video/Audio-Informationen offen zugänglich ist, wohingegen es während der Lagerung bzw. während des Einsatzes geschützt bleibt.

Zweckmäßigerweise kann die Schutzabdeckung vom Display oder Gehäuse beispielsweise über eine Rastverbindung lösbar, d.h. abnehmbar, und anschließend mit dem Display oder Gehäuse wieder verbindbar sein.

Insbesondere kann die Schutzabdeckung auch am Rettungsgerät unverlierbar befestigt sein, wobei letztere zur Freilegung des Displays lediglich in seiner Position zum Display oder Gehäuse veränderbar sein kann. Hierdurch wird vermieden, dass die Schutzabdeckung nach Zurverfügungstellung der Video- bzw. Video/Audio-Informationen versehentlich verlegt und nicht mehr auffindbar ist.

Zweckmäßigerweise ist die Schutzabdeckung zum Display verschiebbar angeordnet. Insbesondere kann die Schutzabdeckung in Längsrichtung zur Längserstreckung des Rettungsgeräts verschiebbar befestigt sein. Hierdurch wirkt die Schutzabdeckung bei freigelegtem Display nicht störend.

Alternativ kann die Schutzabdeckung zum Display auch verschwenkbar sein. Auch hierdurch wird eine einfache Handhabung ermöglicht.

Gemäß einer zweckmäßigen Ausgestaltung ist das Display als sogenanntes Faltdisplay vorgesehen. Es kann nach Art eines Buchs zusammengeklappt werden, wodurch gleichzeitig ein ausreichender mechanischer Schutz gewährleistet ist. Sobald Informationen benötigt werden, wird das Faltdisplay entfaltet.

Des Weiteren kann das Display auch mit einer gekrümmten Außenfläche versehen sein. Dies hat den Vorteil, dass die Videoinformationen im Einsatz besser von dem Benutzer erkennbar sind.

Bei den Videodaten und/oder Audiodaten handelt es sich vorzugsweise um komprimierte Daten.

Was die Benutzerführungsdaten anbelangt, so handelt es sich erfindungsgemäß um Pkw-herstellerspezifische und/oder Rettungsdaten-spezifische Benutzerführungsdaten. Hierdurch wird beispielsweise ermöglicht, dass der Benutzer, z.B. ein Feuerwehrmann, sobald er an den Unfallort gelangt, Informationen zu dem Unfallfahrzeug über das Display in Form von Videodaten oder Video/Audio-Daten abspielen kann, die ihm zeigen, wie er beispielswiese bei einem batteriebetriebenen Fahrzeug die Hochspannungsquelle sicher deaktivieren kann, um zu vermeiden, dass bei der Rettung versehentlich z.B. Hochspannungskabel durchtrennt werden.

Bei der Kommunikationsschnittstelle am Rettungsgerät kann es sich um eine Nahfeldkommunikationsschnittstelle bzw. auf RFID basierende Schnittstelle (NFC-Schnittstelle), eine Drahtloskommunikationsschnittstelle mit einer maximalen Reichweite von 100 m, vorzugsweise um eine sogenannte Bluetooth-Schnittstelle oder eine WLAN-Schnittstelle, eine drahtgebundene Schnittstelle oder eine Kombination von mindestens zwei der vorgenannten verschiedenen Schnittstellen handeln. Beispielsweise können Daten von einem Smartphone über eine der vorgenannten Schnittstellen in einfacher Weise auf das Rettungsgerät bzw. dessen Speicher übertragen werden.

Über das Display d. h. durch Betätigung des Displays kann in vorteilhafter Weise auch das Ein- und/oder Ausschalten des Rettungsgeräts erfolgen. Ein bisher bei Rettungsgeräten üblicher separater mechanischer Ein- oder Ausschalter ist somit nicht mehr nötig. Dies trägt zur Reduzierung der Herstellungskosten bei.

Die Erfindung betrifft ferner eine Anordnung umfassend ein Rettungsgerät nach mindestens einem der Ansprüche 1 bis 13 sowie einen vom Benutzer tragbaren Computer, wobei die Videodaten oder Videodaten und Audiodaten mittels dem vom Benutzer tragbaren Computer auf das Rettungsgerät übertragbar sind.

### Beschreibung der Erfindung anhand von Ausführungsbeispielen

Nachstehend werden zweckmäßige Ausführungsbeispiele der vorliegenden Anmeldung näher erläutert. Wiederkehrende Merkmale sind der Übersichtlichkeit halber lediglich einmal mit einem Bezugszeichen versehen. Es zeigen:
- Fig. 1: eine erste Ausgestaltung eines erfindungsgemäßen tragbaren Rettungsgeräts;
- Fig. 2: eine stark vereinfachte schematische Darstellung der wesentlichen Funktionskomponenten eines Rettungsgeräts einschließlich dessen Steuer- und Regeleinheit gemäß der vorliegenden Erfindung;
- Fig. 3: eine zweite Ausgestaltung eines Rettungsgeräts gemäß der vorliegenden Erfindung;
- Fig. 4: das Rettungsgerät gemäß Fig. 3 mit abgenommener Schutzabdeckung;
- Fig. 5: eine dritte Ausgestaltung eines Rettungsgeräts gemäß der vorliegenden Erfindung;
- Fig. 6: eine vierte Ausgestaltung eines Rettungsgeräts gemäß der vorliegenden Erfindung;
- Fig. 7: eine stark vereinfachte Teilschnittdarstellung eines Rettungsgeräts der vorliegenden Erfindung, bei dem ein Faltdisplay zum Einsatz kommt in aufgefaltetem Zustand (Fig. 7a) sowie in gefaltetem Zustand (Fig. 7b);
- Fig. 8: eine stark vereinfachte Ausgestaltung eines erfindungsgemäßen Rettungsgeräts unter Verwendung eines gekrümmten Displays;
- Fig. 9: eine Darstellung einer Möglichkeit der Übertragung von Benutzerführungsdaten auf das Rettungsgerät gemäß der vorliegenden Erfindung; sowie
- Fig. 10: eine stark vereinfachte Teilschnittdarstellung eines Rettungsgeräts der vorliegenden Erfindung unter Verwendung eines planen Displays.

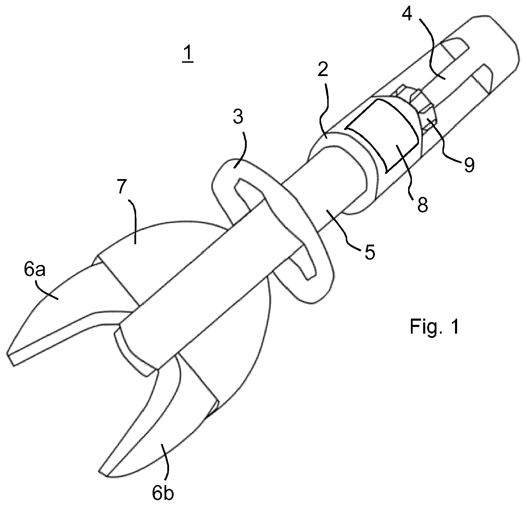

Fig. 1 zeigt eine erste Ausgestaltung eines Rettungsgeräts gemäß der vorliegenden Erfindung. Bezugsziffer 1 bezeichnet das Rettungsgerät in seiner Gesamtheit. Es handelt sich bei dem in Fig. 1 gezeigten Rettungsgerät 1 um ein Schneidgerät (Cutter), welches beispielsweise von Einsatzkräften zur Befreiung im Straßenverkehr verunfallter Personen verwendet wird. Das Rettungsgerät 1 ist portabel, d. h. kann von einer Bedienungsperson per Hand mitgeführt werden.

Das Rettungsgerät 1 umfasst ein Gehäuse 2, an dessen Vorderseite sich ein Hydraulikzylinder 5 anschließt. Im vorderen Bereich des Rettungsgeräts 1 befinden sich zwei Werkzeughälften 6a, 6b. In dem in Fig. 1 gezeigten Beispiel handelt es sich hierbei um zwei Schneiden. Darüber hinaus umfasst das Rettungsgerät 1 eine Abdeckung 7 sowie einen ersten Handgriff 3 im Bereich des Hydraulikzylinders 5, welcher als Tragegriff dient sowie einen zweiten Handgriff 4 im Bereich des Gehäuses 2, welcher im Einsatz umgriffen wird. Im Bereich des zweiten Handgriffs 4 befindet sich eine Handhabe 9, beispielsweise ein sogenannter Sterngriff, mit dem die jeweilige Arbeitsrichtung der Werkzeughälften 6a, 6b von der Bedienungsperson ausgewählt werden kann.

Das Rettungsgerät 1 wird von der Bedienungsperson im Einsatz mit zwei Händen an den beiden Handgriffen 3, 4 gehalten.

Darüber hinaus umfasst das Rettungsgeräts 1 ein Video-fähiges Display 8. Unter einem "Video-fähigen Display" ist ein Display zu verstehen, welches in der Lage ist, Videodaten VD, also Filme oder Filmsequenzen, abzuspielen oder wiederzugeben. Die Videodaten VD können als Schwarz/Weiß-Filme oder als Farbfilme wiedergegeben werden. Bei den Videodaten VD handelt es sich um sogenannte Benutzerführungsdaten, also um Videodaten, die die Benutzung des Rettungsgeräts 1 betreffen. Hierdurch wird es möglich, dass der Benutzer des Rettungsgeräts 1 während des Einsatzes, beispielsweise nach Eintreffen an einem verunfallten Pkw, Videodaten VD in Bezug auf den Einsatz des Rettungsgeräts 1 an dem konkret verunfallten Pkw aufzuspielen. Beispielsweise kann er sich hierdurch anzeigen lassen, wo bzw. wie bei dem Pkw die Hochspannungsversorgung deaktiviert werden kann. Der Benutzer des Rettungsgeräts 1 wird somit in seinen Rettungsmaßnahmen "geführt", indem er zunächst den Hochspannungskreis des Pkws deaktiviert und anschließend mit dem Rettungsgerät 1 elektrische Verbindungen durchtrennt.

Bei dem Video-fähigen Display 8 handelt es sich vorzugsweise um einen sogenannten Touch-Screen, d.h. um ein Display, über welches per Berührung Steuerbefehle vom Benutzer eingegeben werden können.

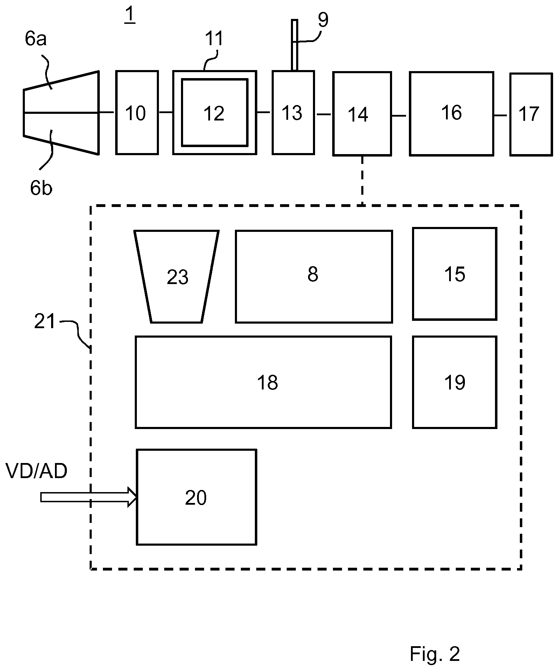

Fig. 2 zeigt die wesentlichen Funktionselemente der Rettungsgeräte 1 der einzelnen Ausgestaltungen in stark vereinfachter schematischer Darstellungsweise. Im oberen Bereich von Fig. 2 befindet sich der mechanische Teil des Rettungsgeräts 1. Dieser umfasst einen Hydrauliktank 16 zur Aufbewahrung von Hydraulikflüssigkeit und einen Hydraulikzylinder 11 mit einer darin befindlichen Kolbenstange 12, die über eine mechanische Anlenkung 10 mit den Werkzeughälften 6a, 6b in Verbindung steht. Je nach Position der Kolbenstange 12 werden aufgrund der mechanischen Anlenkung 10 die Werkzeughälften 6a, 6b entweder aufeinander zu oder voneinander weg bewegt. Bezugsziffer 13 bezeichnet ein sogenanntes Mehrwegeventil, welches festlegt, ob die Kolbenstange 12 in dem Hydraulikzylinder ausgefahren oder eingefahren wird bzw. ob sich die Steuerung in einem passiven Zustand befindet, bei dem Hydraulikflüssigkeit lediglich vom Hydrauliktank 16 zum Mehrwegeventil 13 und im Bypassbetrieb zurück geleitet wird. Zur Betätigung des Mehrwegeventils 13 ist eine Handhabe 9 vorgesehen, die in dem in Fig. 1 gezeigten Beispiel als Sterngriff ausgebildet ist.

Des Weiteren umfasst das Rettungsgerät eine Hydraulikpumpe 14 sowie eine Ausgleichseinrichtung 17 am Tank, die dafür sorgt, dass ein Volumenausgleich abhängig von der Stellung der Kolbenstange 12 innerhalb des Hydraulikzylinders 11 erfolgen kann.

Gesteuert wird die Hydraulikpumpe 14 von einer Steuer- und Regeleinheit 21, die in Fig. 2 ebenfalls stark vereinfacht schematisch wiedergegeben ist. Sie umfasst einen Prozessor 18 mit einem Speicher 19 sowie einem Akku 15, der am Rettungsgerät 1 mitgeführt wird. Darüber hinaus umfasst die Steuer- und Regeleinheit 21 auch das Video-fähige Display 8 und einen Lautsprecher 23 zur Wiedergabe von Audiodaten.

Um das Video-fähige Display 8 mit entsprechenden Videodaten VD zu versorgen, ist eine Kommunikationsschnittstelle 20 für Videodaten VD vorgesehen. Über die Kommunikationsschnittstelle 20 können Videodaten VD auf das Rettungsgerät 1 bzw. dessen Steuer- und Regeleinheit 21 übertragen, im Speicher 19 abgespeichert werden und bei Bedarf über den Prozessor 18 aufgerufen werden. Die Steuerung und/oder Befehlseingabe erfolgt hierbei vorzugsweise über das Video-fähige Display 8, welches als Touch-Screen ausgebildet ist.

Zusätzlich können bei Bedarf nicht nur Videodaten VD sondern auch Audiodaten AD über die Kommunikationsschnittstelle 20 auf das Rettungsgerät 1 übertragen werden.

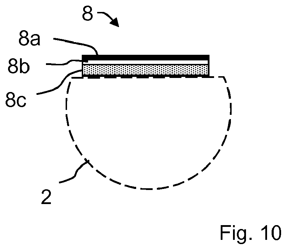

Das Video-fähige Display 8 weist zweckmäßigerweise eine dauerhaft am Display 8 befestigte Schutzschicht 8a, vgl. Fig. 10, auf. Hierbei kann es sich um eine Glasschicht oder eine transparente Kunststoffschicht handeln. Darunter befindet sich eine sogenannte Touch-Folie 8b. Darunter befindet sich die Display-Schichtenfolge 8c, bei der es sich z.B. um einen sogenannten LCD-Display (Liquid Crystal Display) handeln kann.

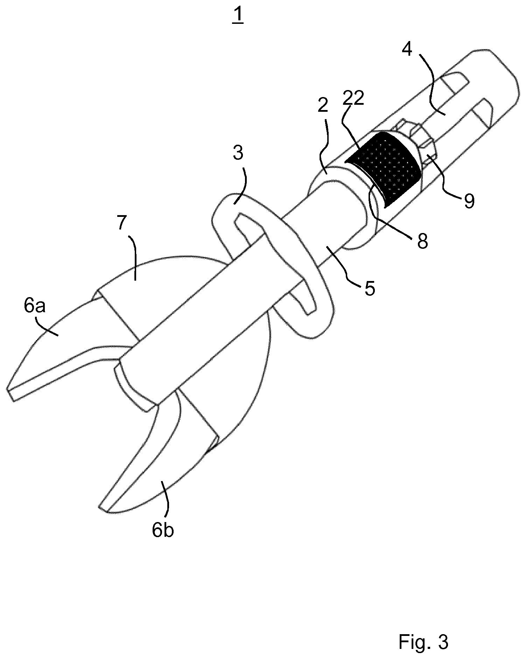

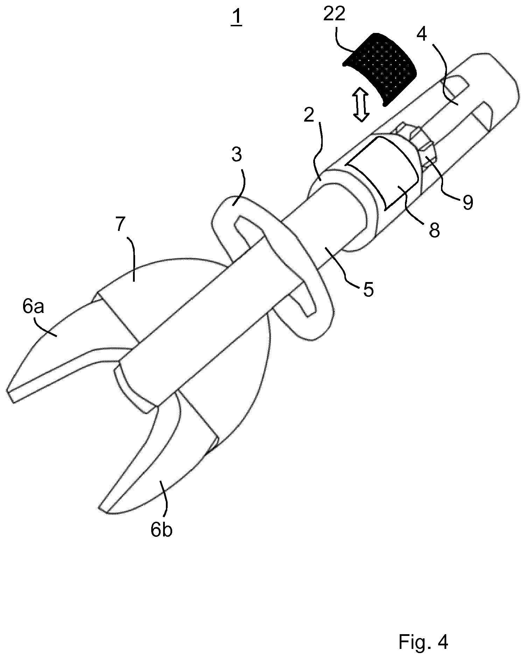

Fig. 3 zeigt eine weitere Ausgestaltung des erfindungsgemäßen Rettungsgeräts 1, bei der das Video-fähige Display 8 mittels einer Schutzabdeckung 22 abgedeckt ist. Die Schutzabdeckung 22 sorgt dafür, dass das Display 8 während der Lagerung sowie auch während des Einsatzes des Rettungsgeräts 1 nicht beschädigt werden kann. Bei der Schutzabdeckung 22 handelt es sich um eine gegen Schlag-, Druck- und/oder Kratzbeeinträchtigung wirksame Hülle, die das Display 8 umgibt. Die Schutzabdeckung 22 wird erst dann entfernt, d.h. das Display 8 freigelegt, wenn der Benutzer Informationen vom Display benötigt. Hierzu kann die Schutzabdeckung 22 am Gehäuse 2 des Rettungsgeräts 1 über eine geeignete mechanisch lösbare Verbindung, beispielsweise eine (jeweils nicht dargestellte) Rast- oder Schnappverbindung oder mindestens einem Halter fixiert sein. Die Verbindung kann bei Bedarf, wie in Fig. 4 gezeigt, zur Freigabe des Displays 8 gelöst werden, sodass die Schutzabdeckung 22 abgenommen werden kann.

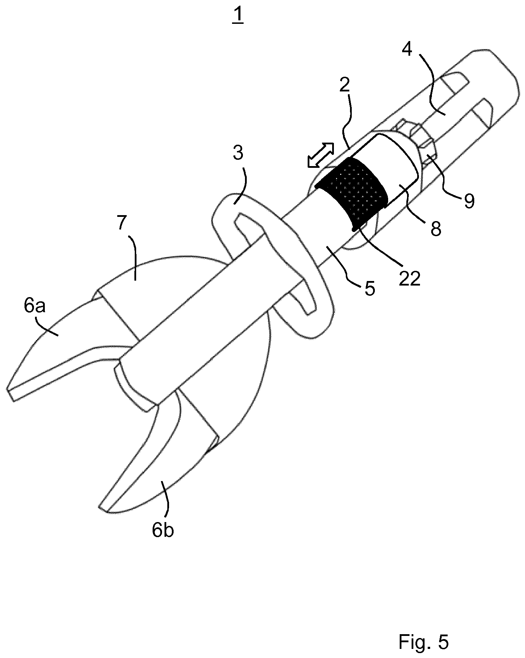

Bei der Ausgestaltung des Rettungsgeräts 1 gemäß Fig. 5 verbleibt die Schutzabdeckung 22 während der Lagerung sowie des Betriebs am Rettungsgerät 1. Sie kann jedoch in ihrer Position zum Display 8 bzw. Gehäuse 2 verändert werden. Bei dem in Fig. 5 gezeigten Beispiel ist die Schutzabdeckung 22 derart am Gehäuse 2 bzw. Display 8 befestigt, dass sie bei Bedarf in Richtung hin zu den Werkzeughälften 6a, 6b, also entlang der Haupterstreckung des Rettungsgeräts 1 verschoben werden kann, wodurch das Display 8 freigelegt wird. Sofern die Bedienungsperson die Information erhalten hat, wird die Schutzabdeckung 22 wieder zurück in die Ausgangsstellung über den Display 8 verschoben.

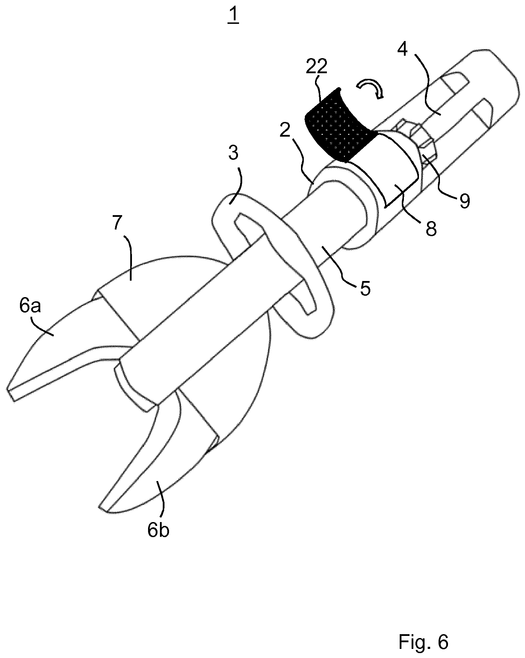

Alternativ kann, wie dies in Fig. 6 dargestellt ist, die Befestigung der Schutzabdeckung 22 auch derart ausgeführt sein, dass die Schutzabdeckung 22 zur Seite vom Display 8 aufgeklappt werden kann. Auch hierdurch wird ein schnelles Freilegen des Displays 8 sowie anschließendes Wiederverschließen ermöglicht.

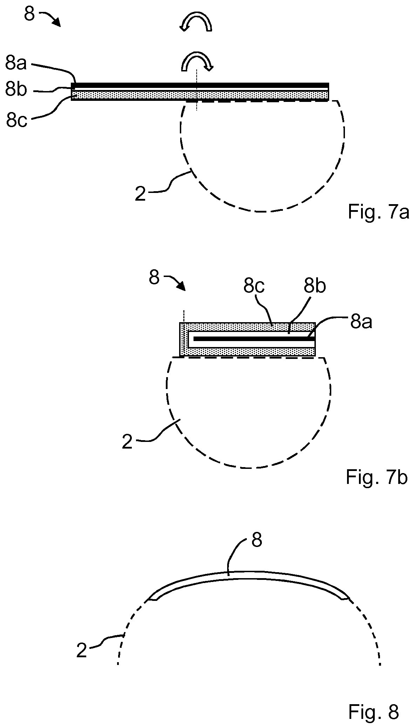

Gemäß einer zweckmäßigen Ausgestaltung der vorliegenden Erfindung kann das Display 8 auch als sogenanntes Faltdisplay ausgebildet sein. Auch hier umfasst das Display 8 eine Schutzschicht 8a, eine Touch-Folie 8b sowie die eigentliche Display-Schichtenfolge 8c. Die Schutzschicht 8a muss allerdings hierbei genauso wie die Touch-Folie 8b flexibel ausgebildet sein. Im zusammengefalteten Zustand gemäß Fig. 7b ist das Display 8 vor mechanischer Beeinträchtigung geschützt. Benötigt der Benutzer Informationen, so braucht er lediglich das Faltdisplay zu entfalten, wie dies in Fig. 7a dargestellt ist. An der Unterseite des Displays 8 ist jeweils lediglich stark vereinfacht der Umriss des Gehäuses 2 wiedergegeben.

Gemäß einer besonders zweckmäßigen Ausgestaltung kann das Display 8 auch, wie in Fig. 8 dargestellt, gekrümmt ausgebildet sein. Die jeweiligen Schichten 8a, 8b sowie 8c sind in der Darstellung gemäß Fig. 8 der Übersichtlichkeit halber weggelassen. Auch das gekrümmte Display 8 gemäß Fig. 8 kann jedoch die Schichtenfolge 8a-8c beinhalten. Das gekrümmte Display 8 gewährleistet für den Benutzer eine noch besserer Erkennbar der Videodaten VD im Einsatz. Darüber hinaus passt sich die Krümmung des Displays 8 in etwa dem gekrümmten Verlauf des Gehäuses 2 an.

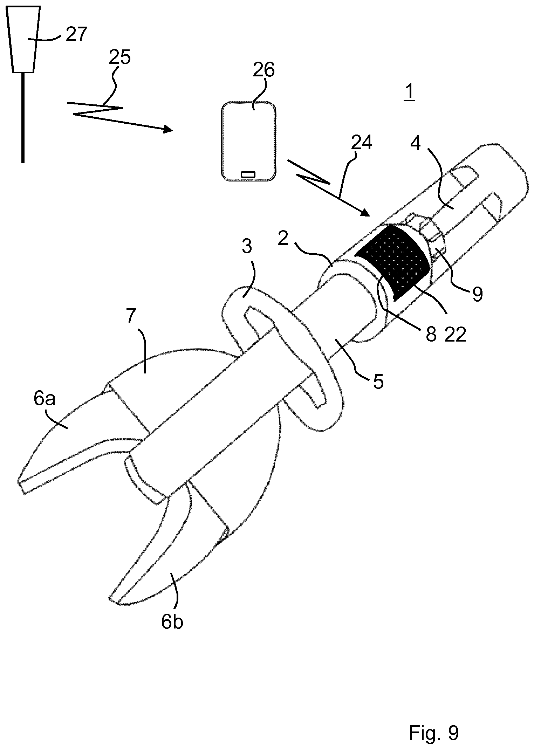

Aus Fig. 9 ist ersichtlich, wie Daten auf das Rettungsgerät 1 überspielt werden können. Dementsprechend kann über die Kommunikationsschnittstelle 20, vgl. Fig. 2, mit einem tragbaren Computer 26, zweckmäßiger Weise einem Smartphone oder Handheld, eine Nahfeldkommunikation, Drahtloskommunikation bzw. drahtgebundene Kommunikation aufgebaut werden. Bei der in Fig. 9 gezeigten Ausgestaltung ist eine Drahtloskommunikation 24 zwischen dem tragbaren Computer 26 und dem Rettungsgerät 1 vorgesehen. Die Daten des tragbaren Computers 26 können wiederum von letzterem beispielsweise über ein GSM-Kommunikationsnetzwerk 25 oder WAN-Netzwerk übertragen werden. Bezugsziffer 27 zeigt exemplarisch einen Sendemast des GSM-Kommunikationsnetzwerks 25.

Bei der Kommunikationsschnittstelle 20 handelt es sich beispielsweise um eine Nahfeldkommunikationsschnittstelle bzw. auf RIFD basierende Schnittstelle, auch NFC-Schnittstelle genannt. Bei einer derartigen Kommunikation wird der tragbare Computer 26 bzw. das Smartphone in unmittelbare Nähe zu dem entsprechenden Empfangsteil in der Steuer- und Regeleinheit 21 des Rettungsgeräts 1 gebracht, woraufhin Daten übertragen werden können.

Alternativ kann auch eine Drahtloskommunikationsschnittstelle mit einer maximalen Reichweite von 100 m, vorzugsweise eine Bluetooth-Schnittstelle oder eine WLAN-Schnittstelle, vorgesehen sein. Alternativ oder zusätzlich ist es auch möglich, Daten per Kabel von dem tragbaren Computer 26 aus auf das Rettungsgerät 1 zu übertragen.

Über das Display 8 d. h. durch Betätigung des Displays 8 kann in vorteilhafter Weise auch das Ein- und/oder Ausschalten des Rettungsgeräts erfolgen. Ein separater mechanischer Ein- oder Ausschalter ist somit nicht mehr nötig.

Es wird betont, dass es sich bei den Rettungsgeräten 1 der vorliegenden Beispiele auch um einen Spreizer oder ein sogenanntes Kombigerät handeln kann, welches sowohl zum Schneiden als auch zum Spreizen eingesetzt werden kann. Ebenso kann es sich bei einem erfindungsgemäßen Rettungsgerät auch um einen sogenannten Rettungszylinder handelt, der lediglich einen Handgriff aufweist und im Einsatz von der Bedienungsperson mit nur einer Hand geführt wird. Auch beim Einsatz eines Rettungszylinders ist es sehr wichtig, Benutzerführungsdaten notfalls während des Einsatzes rasch abrufen zu können.

### BEZUGSZEICHENLISTE

- 1: Rettungsgerät
- 2: Gehäuse
- 3: erster Handgriff
- 4: zweiter Handgriff
- 5: Zylinder
- 6a: Werkzeughälfte
- 6b: Werkzeughälfte
- 7: Abdeckung
- 8: Display
- 8a: Schutzschicht
- 8b: Touch-Folie
- 8c: Display-Schichtenfolge
- 9: Handhabe
- 10: mechanische Anlenkung
- 11: Hydraulikzylinder
- 12: Kolbenstange
- 13: Mehrwegeventil
- 14: Hydraulikpumpe
- 15: Akku
- 16: Hydrauliktank
- 17: Ausgleichseinrichtung
- 18: Prozessor
- 19: Speicher
- 20: Kommunikationsschnittstelle
- 21: Steuer- und Regeleinheit
- 22: Schutzabdeckung
- 23: Lautsprecher
- 24: Drahtloskommunikation
- 25: GSM-Kommunikationsnetzwerk
- 26: tragbarer Computer
- 27: Sendemast

- VD: Videodaten
- AD: Audiodaten

## Patentansprüche

1. Tragbares Rettungsgerät (1), nämlich Spreizgerät, Schneidgerät, Kombigerät mit Schneid- sowie Spreizfunktion oder Rettungszylinder, für den portablen Rettungseinsatz mit
einem Gehäuse (2),
einem ersten Handgriff (3) zur einhändigen Betätigung des Rettungsgeräts durch einen Anwender oder einem ersten Handgriff (3) sowie einem zweiten Handgriff (4) zur beidhändigen Betätigung des Rettungsgeräts durch einen Anwender,
einem im Gehäuse (12) befindlichen Elektromotor,
einer Energieversorgung
in Form eines am Rettungsgerät (1) untergebrachten Akkus (15),
oder eines Anschlusses für die Verbindung mit einer externen elektrischen Energiequelle,
einer mechanisch oder hydraulisch angetriebenen, verfahrbarer Kolbenstange (12) zum Verrichten von Arbeit, insbesondere Spreizarbeit und/oder Schneidarbeit,
einem Video-fähigem Display (8),
einer elektronischen Steuer- und Regeleinrichtung zur Steuerung und/oder Regelung des Elektromotors (3) und des Displays,
wobei das Rettungsgerät (1) eine Kommunikationsschnittstelle (20) für Videodaten (VD) aufweist,
wobei das Display (8) am Gehäuse (12) des Rettungsgeräts (1) angeordnet ist, und
**dadurch gekennzeichnet, dass**
es sich bei den Videodaten (VD) um Pkw-herstellerspezifische und/oder Rettungskarten-spezifische Benutzerführungsdaten handelt.

2. Rettungsgerät nach Anspruch 1, **dadurch gekennzeichnet, dass**
das Rettungsgerät (1) eine Kommunikationsschnittstelle (20) für Audiodaten (AD) aufweist und
dass es sich bei den Audiodaten (AD) um Benutzerführungsdaten handelt.

3. Rettungsgerät nach Anspruch 1 oder 2, **dadurch gekennzeichnet, dass** an der Oberseite des Displays (8) eine dauerhaft am Display (8) befestigte Schutzschicht (8a) vorgesehen ist.

4. Rettungsgerät nach mindestens einem der vorhergehenden Ansprüche, **dadurch gekennzeichnet, dass**
eine Schutzabdeckung (22) am Display (8) vorgesehen ist, die bei Bedarf während des Betriebs zur Freilegung des Displays (8) entfernbar ist.

5. Rettungsgerät nach Anspruch 4, **dadurch gekennzeichnet, dass** die Schutzabdeckung (22) vom Display (8) oder Gehäuse (2) lösbar und mit dem Display (8) oder Gehäuse (2) wiederverbindbar ist.

6. Rettungsgerät nach Anspruch 4, **dadurch gekennzeichnet, dass** die Schutzabdeckung (22) während des Betriebs am Rettungsgerät (1) verbleibt jedoch in seiner Position zum Display (8) oder Gehäuse (2) veränderbar ist.

7. Rettungsgerät nach Anspruch 4 bis 6, **dadurch gekennzeichnet, dass** die Schutzabdeckung (22) zum Display (8) verschiebbar ist.

8. Rettungsgerät nach Anspruch 4 bis 6, **dadurch gekennzeichnet, dass** die Schutzabdeckung (22) zum Display (8) verschwenkbar ist.

9. Rettungsgerät nach mindestens einem der vorhergehenden Ansprüche, **dadurch gekennzeichnet, dass** als Display (8) ein Faltdisplay vorgesehen ist.

10. Rettungsgerät nach mindestens einem der vorhergehenden Ansprüche, **dadurch gekennzeichnet, dass** das Display (8) gekrümmt ist.

11. Rettungsgerät nach mindestens einem der vorhergehenden Ansprüche, **dadurch gekennzeichnet, dass** die Videodaten (VD) und/oder Audiodaten (AD) komprimiert sind.

12. Rettungsgerät nach mindestens einem der vorhergehenden Ansprüche, **dadurch gekennzeichnet, dass** es sich bei Kommunikationsschnittstelle (20) um
eine Nahfeldkommunikations-Schnittstelle bzw. auf RFID basierende Schnittstelle,
eine Drahtloskommunikations-Schnittstelle mit einer maximalen Reichweite von 100m, vorzugsweise um eine Bluetooth-Schnittstelle oder eine WLAN-Schnittstelle,
drahtgebundene Schnittstelle oder
eine Kombination davon
handelt.

13. Rettungsgerät nach mindestens einem der vorhergehenden Ansprüche, **dadurch gekennzeichnet, dass** das Ein- und/oder Ausschalten des Rettungsgeräts (1) über das Display (8) erfolgt.

14. Anordnung umfassend ein Rettungsgerät nach mindestens einem der vorhergehenden Ansprüche sowie einen vom Benutzer tragbaren Computer (26), wobei die Videodaten (VD) oder Videodaten (VD) und Audiodaten (AD) mittels dem vom Benutzer tragbaren Computer (26) auf das Rettungsgerät (1) übertragbar sind.

## Claims

1. Portable rescue device (1), specifically a spreading device, cutting device, combination device with cutting and spreading function or rescue cylinder, for portable rescue use, comprising
a housing (2),
a first handle (3) for one-handed actuation of the rescue device by a user, or a first handle (3) and a second handle (4) for two-handed actuation of the rescue device by a user,
an electric motor located in the housing (12),
a power supply
in the form of a rechargeable battery (15) accommodated on the rescue device (1)
or a connection for connecting to an external electrical power source,
a mechanically or hydraulically driven, movable piston rod (12) for performing work, in particular spreading work and/or cutting work,
a video-capable display (8),
an electronic open-loop and closed-loop control device for open-loop and/or closed-loop control of the electric motor (3) and the display,
wherein the rescue device (1) has a communications interface (20) for video data (VD),
wherein the display (8) is arranged on the housing (12) of the rescue device (1), and
**characterized in that**
the video data (VD) is car-manufacturer-specific and/or rescue-card-specific user guidance data.

2. Rescue device according to Claim 1, **characterized in that**
the rescue device (1) has a communications interface (20) for audio data (AD) and
**in that** the audio data (AD) is user guidance data.

3. Rescue device according to Claim 1 or 2, **characterized in that** a protective layer (8a) permanently fixed to the display (8) is provided on the upper side of the display (8).

4. Rescue device according to at least one of the preceding claims, **characterized in that**
a protective covering (22) which, if necessary, can be removed during the operation to expose the display (8), is provided on the display (8).

5. Rescue device according to Claim 4, **characterized in that** the protective covering (22) can be detached from the display (8) or housing (2) and reconnected to the display (8) or housing (2).

6. Rescue device according to Claim 4, **characterized in that** the protective covering (22) remains on the rescue device (1) during operation but its position in relation to the display (8) or housing (2) can be changed.

7. Rescue device according to Claims 4 to 6, **characterized in that** the protective covering (22) is displaceable relative to the display (8).

8. Rescue device according to Claims 4 to 6, **characterized in that** the protective covering (22) is pivotable relative to the display (8).

9. Rescue device according to at least one of the preceding claims, **characterized in that** a folding display is provided as the display (8).

10. Rescue device according to at least one of the preceding claims, **characterized in that** the display (8) is curved.

11. Rescue device according to at least one of the preceding claims, **characterized in that** the video data (VD) and/or audio data (AD) is compressed.

12. Rescue device according to at least one of the preceding claims, **characterized in that** the communications interface (20) is
a near-field communications interface or an interface based on RFID,
a wire-free communications interface having a maximum range of 100 m, preferably a Bluetooth interface or a WLAN interface,
a wired interface or
a combination thereof.

13. Rescue device according to at least one of the preceding claims, **characterized in that** the rescue device (1) is switched on and/or off via the display (8).

14. Arrangement comprising a rescue device according to at least one of the preceding claims and a computer (26) that can be carried by the user, wherein the video data (VD) or video data (VD) and audio data (AD) can be transferred to the rescue device (1) by means of the computer (26) that can be carried by the user.

## Revendications

1. Appareil de sauvetage portatif (1), à savoir appareil d'écartement, appareil de coupe, appareil combiné ayant une fonction de coupe et une fonction d'écartement ou cylindre de sauvetage, destiné à une utilisation de sauvetage portative, ledit appareil de sauvetage comprenant
un boîtier (2),
une première poignée (3) permettant à un utilisateur d'actionner l'appareil de sauvetage d'une main ou une première poignée (3) et une deuxième poignée (4) permettant à un utilisateur d'actionner l'appareil de sauvetage à deux mains,
un moteur électrique situé dans le boîtier (12), une alimentation en énergie se présentant
sous la forme d'une batterie (15) placée au niveau de l'appareil de sauvetage (1),
ou d'un raccord destiné à être relié à une source d'énergie électrique extérieure,
une tige de piston mobile (12) entraînée mécaniquement ou hydrauliquement et destinée à effectuer des travaux, en particulier des travaux d'écartement et/ou des travaux de coupe,
un affichage vidéo-compatible (8),
un dispositif de commande et de régulation électronique destiné à commander et/ou réguler le moteur électrique (3) et l'affichage,
l'appareil de sauvetage (1) comportant une interface de communication (20) destinée à des données vidéo (VD),
l'affichage (8) étant disposé au niveau du boîtier (12) de l'appareil de sauvetage (1), et
**caractérisé en ce que**
les données vidéo (VD) sont des données de guidage d'utilisateur spécifiques au constructeur automobile et/ou spécifiques à la carte de sauvetage.

2. Appareil de sauvetage selon la revendication 1, **caractérisé en ce que**
l'appareil de sauvetage (1) comporte une interface de communication (20) destinée à des données audio (AD) et
les données audio (AD) sont des données de guidage d'utilisateur.

3. Appareil de sauvetage selon la revendication 1 ou 2, **caractérisé en ce qu'**une couche de protection (8a) fixée à demeure sur l'affichage (8) est prévue sur le côté supérieur de l'affichage (8).

4. Appareil de sauvetage selon l'une au moins des revendications précédentes, **caractérisé en ce que**
un couvercle de protection (22), qui peut être enlevé si nécessaire pendant le fonctionnement pour exposer l'affichage (8), est prévu sur l'affichage (8).

5. Appareil de sauvetage selon la revendication 4, **caractérisé en ce que** le couvercle de protection (22) peut être détaché de l'affichage (8) ou du boîtier (2) et relié à nouveau à l'affichage (8) ou au boîtier (2).

6. Appareil de sauvetage selon la revendication 4, **caractérisé en ce que** le couvercle de protection (22) reste sur l'appareil de sauvetage (1) pendant le fonctionnement, mais sa position par rapport à l'affichage (8) ou au boîtier (2) peut être modifiée.

7. Appareil de sauvetage selon les revendications 4 à 6, **caractérisé en ce que** le couvercle de protection (22) est apte à coulisser par rapport à l'affichage (8).

8. Appareil de sauvetage selon les revendications 4 à 6, **caractérisé en ce que** le couvercle de protection (22) est apte à pivoter par rapport à l'affichage (8).

9. Appareil de sauvetage selon l'une au moins des revendications précédentes, **caractérisé en ce qu'**un affichage rabattable est prévu comme affichage (8).

10. Appareil de sauvetage selon l'une au moins des revendications précédentes, **caractérisé en ce que** l'affichage (8) est incurvé.

11. Appareil de sauvetage selon l'une au moins des revendications précédentes, **caractérisé en ce que** les données vidéo (VD) et/ou audio (AD) sont compressées.

12. Appareil de sauvetage selon l'une au moins des revendications précédentes, **caractérisé en ce que** l'interface de communication (20) est
une interface de communication en champ proche ou une interface RFID,
une interface de communication sans fil d'une portée maximale de 100 m, de préférence autour d'une interface Bluetooth ou d'une interface WLAN,
une interface filaire ou
une combinaison de celles-ci.

13. Appareil de sauvetage selon l'une au moins des revendications précédentes, **caractérisé en ce que** l'appareil de sauvetage (1) est allumé et/ou éteint par le biais de l'affichage (8).

14. Ensemble comprenant un appareil de sauvetage selon l'une au moins des revendications précédentes et un ordinateur (26) pouvant être porté par un utilisateur, les données vidéo (VD) ou les données vidéo (VD) et les données audio (AD) pouvant être transmises à l'appareil de sauvetage (1) au moyen de l'ordinateur (26) pouvant être porté par l'utilisateur.
